# EUROPEAN PATENT SPECIFICATION

(11) **EP 0 453 254 B1**
(45) Date of publication and mention of the grant of the patent: **25.06.1997**
(21) Application number: 91303411.2
(22) Date of filing: 17.04.1991
(51) Int. Cl.: C08J 7/02

(54) **Process for curing elastomer-based pressure sensitive adhesive tapes with low voltage electron beam radiation**
Verfahren zur Vernetzung eines druckempfindlichen elastomeren Klebebands mittels Elektronenstrahlung niederer Energie
Procédé pour réticulation d'un ruban adhésif sensible à la pression à base d'élastomère par irradiation électronique basse tension

(30) Priority: 20.04.1990 US 511641
(43) Date of publication of application: 23.10.1991
(73) Proprietor: MINNESOTA MINING AND MANUFACTURING COMPANY, St. Paul, Minnesota 55133-3427 (US)
(72) Inventor: Yarusso, David J., c/o Minnesota Mining and, St. Paul, Minnesota 55133-3427 (US); Munson, Daniel C., c/o Minnesota Mining and, St. Paul, Minnesota 55133-3427 (US)
(74) Representative: Baillie, Iain Cameron

(56) References cited:
- EP-A- 0 278 662
- US-4 246 297

## Description

### Technical Field

The present invention relates to a method for preparing a pressure sensitive adhesive tape which is manufactured by crosslinking elastomer-based adhesive compositions contained on a radiation degradable substrate using controlled low voltage electron beam radiation. Surprisingly, a balance of desired adhesive and backing properties are obtained, a characteristic hereto unavailable by previously taught electron beam irradiation techniques.

### Background Art

The use of electron beam radiation, i.e., a beam of electrons accelerated through an electric potential, to cure or crosslink polymers used in pressure sensitive adhesives is known in the art. For example, U.S. Patent No. 2,956,904 describes the use of high energy electron beam radiation to crosslink or cure pressure sensitive adhesives to improve the shear properties thereof. The benefits claimed for radiation cure versus conventional sulfur cure include higher shear performance without loss of tack, as well as the absence of staining on lightly colored painted surfaces, typically caused by the presence of sulfur compounds in the adhesive. The radiation disclosed therein was the discharge of high energy electrons from a cathode ray tube powered by a resonant transformer operated at 1000 kV. There is no disclosure therein of using low voltage radiation.

It is also known that electron beam radiation applied at doses necessary to crosslink pressure sensitive adhesives to their desired level of performance (0.5 to 10.0 MRad) can damage many of the backings commonly used to form pressure sensitive tapes, such as cellulose-based backings (e.g., paper and cotton cloth), polypropylene film, polyvinyl chloride film, and polytetrafluoroethylene film.

U.S. Patent No. 4,246,297 discloses the use of a critically adjusted electron beam taught to be capable of curing coatings on a radiation-sensitive substrate. The patent describes the effective beam energy as being in the range of 50 to 300 keV for curing pressure sensitive adhesives on temperature sensitive webs such as paper, plastic and the like, with doses of from 0.5 to 5 MRad. The beam energy of the reference is taught to be controlled through a combination of the accelerating potential and the energy loss of the beam as it travels through the various layers of material prior to reaching the coating to be cured. Such layers include the foil window separating the high vacuum chamber of the electron gun and the atmosphere, a layer of nitrogen gas between the foil and the sample to be cured, and any covering liner over the coating to be cured.

This reference discloses a process for assertedly achieving substantially uniform electron beam cure of a coating while ensuring minimal irradiation of the substrate, e.g., a tape backing. However, the examples described therein disclose a ratio of the irradiation dose at the front of the coating to be cured to that at the back of the coating, i.e., at the coating/backing interface, of 5:1. We have determined that such a degree of dose variation through the thickness of the adhesive is unacceptable for pressure sensitive adhesive coatings because upon removal of the tape from a substrate, cohesive failure of the adhesive results and adhesive residue is undesirably left on the substrate. Pressure sensitive adhesives require a fairly uniform cure throughout the thickness of the adhesive.

### Summary of the Invention

In accordance with the invention there is provided a method for making a pressure sensitive adhesive tape comprising: (1) applying at least one electron beam radiation crosslinkable elastomer-based pressure sensitive adhesive onto a radiation degradable backing, (2) exposing said adhesive to a beam of electrons which has been accelerated through a potential voltage in the range of between 75 and 175 kilovolts, said voltage utilized being dependent upon, (a) the thickness of the adhesive layer, (b) the thickness of said backing and, (c) the degradation of the electron beam prior to impingement on said adhesive layer and selected such that the reduction in dose from the front of said adhesive layer to the back of the adhesive layer is no greater than 40% and the average dose received by said backing is less than 80% of the average dosage received by said adhesive, said pressure sensitive adhesive layer further having been crosslinked with a sufficient dose of beam energy to produce a gel content in said adhesive of at least 20% by weight of said elastomer, said dose to the pressure sensitive adhesive being less than about 12 megarads.

In this manner, a balance of properties is found in the tape not heretofore available in electron beam radiation cured systems.

The balance of properties relates to the adhesive characteristics balanced against the potential degradation of the backing by an exposure to electron beam radiation. We have found that a narrow window of potential is available which will achieve this balance and thus provide a product exhibiting the desired characteristics.

### Detailed Description

The pressure sensitive adhesive tape made according to the method of the present invention comprises a radiation degradable backing coated with an elastomer-based pressure sensitive adhesive. A release coating may be optionally coated on the opposite side or a separate release liner can be used. The adhesive typically comprises one or more electron beam crosslinkable elastomers and one or more tackifying resins, optionally containing fillers and antioxidants. Examples of unsaturated elastomers which can be utilized include natural rubber, synthetic polyisoprene, polybutadiene, styrene/butadiene rubber (SBR), and block copolymers where one of the blocks consists of one of the above elastomers, such as styrene-isoprene-styrene triblock or starblock polymers, as well as acrylic, and silicone elastomers.

Tackifying resins include those known in the art of pressure sensitive adhesive manufacture, examples including polyterpenes, synthetic hydrocarbon resins, rosins, and rosin derivatives such as rosin esters. Antioxidants, similarly known in the art, include, as examples, phenolic types, such as 2,4-di(tert-amyl)hydroquinone and dithiocarbamate types such as zinc dithiobuytlcarbamate. Many fillers can be used, examples including zinc oxide, silica, carbon black and calcium carbonate.

The adhesive can be applied to the backing by any of the commonly known means, examples including solvent casting, latex casting, calendering the adhesive into a film followed by lamination to the backing, and extrusion or hot melt coating of the adhesive onto the backing. Thicknesses of adhesive useful for the tapes of the present invention comprise those commonly used in the industry and are from about 15 µm to about 75 µm.

Backings for the tapes of the invention are those which are radiation degradable, including paper, saturated papers, vinyl films, cellulose-based woven and non-woven fabrics, polypropylene based non-woven fabrics, polypropylene films, and polytetrafluoroethylene films.

The backside, i.e., the non-adhesive containing side, of the backing may be precoated with a release material to facilitate easy unwind of a completed roll of tape. Furthermore, the side of the backing to which the adhesive is to be applied may also be pretreated or coated with a primer material prior to application of the adhesive to enhance bonding of the adhesive to the backing.

The coated tapes are exposed to electron beam radiation from the adhesive side to suitably crosslink the elastomer in the adhesive to provide adequate resistance to flow in the adhesive. The precise degree of crosslinking depends on the specific tape construction and application, but tapes made in accordance with the method of the invention would be crosslinked to the point where at least 20% by weight of the elastomer is insoluble by the gel content test described hereinafter.

The unique balance of adhesive and backing properties of the tape made in accordance with the method of the present invention are achieved through control of the voltage, i.e., the accelerating potential of a beam of electrons, to surprisingly narrow ranges. We have found that the tape constructions can be made within narrow voltage ranges that fall within a broader range of 75 kV to 175 kV.

The range of voltages found useful is dependent on the adhesive and backing thicknesses as well as the degradation of the beam energy prior to impingement on the adhesive sample.

For the present invention, it has been found that the accelerating potential must be high enough to provide a dose at the backing side of the adhesive which is no less than 60%, and preferably no less than 70%, of the dose at the front of the adhesive.

In other words, the reduction in dose through the adhesive layer is no greater than 40% and preferably, no greater than 30%.

It has also been found that the accelerating potential must not be so high as to deliver an average dose in the backing greater than 80% of that received in the adhesive, and preferably not greater than 60% of that received in the adhesive, in order to substantially reduce backing degradation or damage, while allowing adequate cure of the adhesive.

These two conditions heretofore unrecognized will be described in more detail in the examples.

Within the voltage ranges described above, we have further found that doses of less than 12 MRad are required. Above 12 MRad, even with properly chosen voltage, the backing will generally be unacceptably degraded.

To demonstrate the voltage ranges as described herein, the following Table 1 has been constructed. For each of these cases, we assumed the presence of a titanium foil window 12.5 µm thick. The titanium density is 4.51 g/cm³. The nitrogen gap between the foil window and the adhesive surface is assumed to be 19 mm with a density of 1.25 x 10⁻³ g/cm³. The adhesive density was assumed to be 1.0 g/cm₃ and the backing density was chosen to be 0.78 g/cm³ (characteristic of a conventional saturated paper masking tape backing).

**Table 1**

| Adhesive Thickness (µm) | Backing Thickness (µm) | Absolute Minimum Potential (kV) | Preferred Minimum Potential (kV) | Preferred Maximum Potential (kV) | Absolute Maximum Potential (kV) |
|---|---|---|---|---|---|
| 12.7 | 50.8 | 85 | 90 | 100 | 114 |
| 76.2 | 152 | 128 | 134 | 153 | 172 |

### Examples 1 - 24

To demonstrate the value of electron beam curing of pressure sensitive adhesive tapes by the conditions of this invention, a series of tape examples were prepared. For all of these, a pressure sensitive adhesive with the formulation described in Table 2 was used. The rubbers were milled together on a conventional two roll mill and the zinc oxide and antioxidant added and blended. The millbase and the tackifying resin were then dissolved in heptane and coated onto a paper masking tape backing made as described in U.S. Patent 2,410,078. The paper backing is coated with a release coating such as exemplified by U.S. Patent Nos. 2,607,711 and 3,502,497. The adhesive was coated at three thicknesses and irradiated with an ESI "Electrocurtain" machine at accelerating potentials from 100 to 170 kV in 10 kV increments with a dose of 5 MRad. The current necessary to deliver this dose was determined by dosimetry with a thin (8 µm) Nylon chip containing a radiachromic dye from Far West Technologies, Inc. These chips are essentially uniformly irradiated at all of the voltages of interest because they are so thin. Adhesive thicknesses were measured by forming a sandwich of two pieces of tape, measuring the total thickness, subtracting twice the backing thickness and dividing by two.

The optimal voltage ranges by the aforementioned criteria are given in Table 3.

Degradation of the paper backing was measured by the reduction in its flexibility as indicated by the number of cycles to failure in the MIT Folding Endurance Test. The tests were conducted on a 0.5 inch (1.25 cm) wide strip of tape on an MIT Flex Tester Model #1 made by Tinius Olsen Testing Machine Company of Willow Grove, PA.

Crosslinking of the adhesive was measured by the adhesive gel content and the swell ratio. The gel content of the examples is determined by soaking a piece of tape in toluene for 24 hours to extract the portion of the adhesive that is not crosslinked, determining the amount of gelled rubber in the extracted sample, and dividing the amount of gelled rubber by the amount of rubber in the adhesive formulation since only the rubber is typically crosslinked.

The swell ratio is determined by soaking a tape sample in toluene for 24 hours, blotting off the excess solvent from the sample, and determining the amount of swelling by calculating the ratio of the swollen gel weight to that of the dried gel. We also observed whether or not the gel remained bonded to the backing.

A 5 MRad dose was illustrative. From Table 5, one can see that the gel content for these adhesives is about 60% of the rubber which is within the range of useful gel contents. One can see from Tables 6 and 7 that when the accelerating potential is less than the lower limit defined by the invention, the adhesive is poorly cured at the backing side, as indicated by the fact that the cured portion of the adhesive (the gel) floats off the backing (Table 7), because the layer near the backing is soluble and because the average swell ratio of the cured adhesive is considerably higher than the limiting value at high voltage (Table 6). The swell ratio is a measure of the average crosslink density. The higher the swell ratio, the lower the crosslink density. On the other hand, at voltages higher than the upper limits set by the invention, the backing properties are degraded to an unacceptable level. This is illustrated in Table 4. We have found that when the MIT Flex life is below about 300 cycles, paper backings are unacceptably brittle and tend to tear when the tape is removed rapidly from a surface to which it is tightly adhered.

### Examples 25 - 42

A similar study was done with the same tape constructions, choosing the voltage and varying the dose. The gel content and MIT flex for these examples, are given in Tables 8 and 9, respectively. It can be seen that for this specific adhesive system, to achieve the useful range of gel contents (greater than 20%), one would need to use doses greater than 2 MRad. However, a dose of 12 MRad produces unacceptable backing properties, even within the optimal voltage range of the invention. Thus, there is a maximum useful dose range for the invention as well as a limited voltage range.

### Examples 43 - 45

Tape samples were prepared having an adhesive thickness of 34 µm and exposed to voltages of 100 kV, 125 kV, and 175 kV, at a dose of 3 MRad. The tapes were then rolled and the force required to unwind the tape from the roll was measured by attaching the free end of the tape to a scale and pulling on the tape at a rate of 90 inches per minute (228.6 cm per minute). The unwind force is measured in Newtons per centimeter, and the data are shown in Table 10. An unwind force of less than about 3 N/cm, and preferably less than 2.5 N/cm, is desired. At 175 kV, the unwind force is unacceptable.

The following examples illustrate that operating within these limits can produce tapes with unique, functionally important properties.

### Example 46

The adhesive described in Table 2 was coated on the aforementioned saturated paper backing at a coating thickness of 34 µm and irradiated with an ESI "Electrocurtain" processor operated at 125 kV and a dose of 10 MRad. According to the methods of this invention, the ratio of the radiation dose at the adhesive backing side to that at the front adhesive surface was 0.87 and the ratio of average backing dose to average adhesive dose was 0.55. The tape produced had an average flex life of 317 cycles by the MIT flex test, and removed cleanly with no adhesive transfer from a painted panel after exposure to 129°C (265°F) and peeling hot. The peel adhesion removal force from the backside of the tape was measured by adhering a strip of tape to a hard surface with a 2 kg hard rubber roller. A second strip of tape was adhered onto the backside of the first strip in a like manner. The adhesion value was measured by attaching a scale to a free end of the tape and pulling the scale away at a rate of 90 inches per minute (228.6 cm per minute) at an angle of 180°. The peel adhesion removal force was 1.2 N/cm. Generally, the desired removal force is less than about 2.0 N/cm.

### Comparative Example 1:

The construction of Example 46 was irradiated with the processor operating at 175 kV and a dose of 10 MRad. The ratio of dose at the back to that at the front of the adhesive layer was 1.06. The backing dose to adhesive dose ratio was 0.99 under these conditions. The tape had an average flex life of only 53 cycles, but did remove cleanly from the painted panel at 129°C (265°F). The peel adhesion removal force from the backing was 2.5 N/cm which is unacceptably high for masking tape.

### Comparative Example 2:

The construction of Example 46 was irradiated with the processor operating at 100 kV and a dose of 10 MRad. The ratio of dose at the back to that at the front of the adhesive layer was 0.53. The backing dose to adhesive dose ratio was 0.13. The tape had a flex life of 430 cycles and a peel adhesion removal force from the backing of 1.2 N/cm, but some of the adhesive transferred to the painted panel when the tape was removed at 129°C (265°F), because of the insufficient cure of the back side of the adhesive.

**Table 2**

| Component: | Parts by weight: |
|---|---|
| Ribbed smoked sheet natural rubber | 50 |
| Ameripol "Synpol" 1011A (SBR) | 50 |
| "Escorez" 1304, a tackifier available from Exxon | 50 |
| zinc oxide | 12.5 |
| Wingstay" L, an antioxidant available from Goodyear | 1.0 |

**Table 3**

| Thicknesses and Voltage Ranges of Example Constructions | | | | |
|---|---|---|---|---|
| Adhesive Thickness (µm) | Absolute Minimum Potential (kV) | Preferred Minimum Potential (kV) | Preferred Maximum Potential (kV) | Absolute Maximum Potential (kV) |
| 14.5 | 87 | 92 | 119 | 135 |
| 36.6 | 105 | 111 | 129 | 146 |
| 73.2 | 126 | 133 | 145 | 162 |

**Table 4**

| MIT Flex life (cycles) vs. Adhesive Thickness and Accelerating Potential | | | |
|---|---|---|---|
| | Coating Thickness (µm) | | |
| kV | 14.5 | 36.6 | 73.2 |
| 100 | 678 | 635 | 602 |
| 110 | 359 | 585 | 614 |
| 120 | 355 | 365 | 531 |
| 130 | 243 | 334 | 402 |
| 140 | 233 | 277 | 425 |
| 150 | 150 | 171 | 346 |
| 160 | 124 | 188 | 275 |
| 170 | 76 | 190 | 231 |

**Table 5**

| Gel Content (% of elastomer) vs. Adhesive Thickness and Accelerating Potential | | | |
|---|---|---|---|
| | Coating Thickness (µm) | | |
| kV | 14.5 | 36.6 | 73.2 |
| 100 | 35.4 | 21.9 | 14.9 |
| 110 | 44.0 | 45.0 | 28.4 |
| 120 | 53.3 | 59.6 | 52.9 |
| 130 | 54.8 | 51.9 | 55.8 |
| 140 | 56.8 | 51.7 | 68.8 |
| 150 | 61.0 | 56.6 | 59.3 |
| 160 | 61.4 | 45.1 | 57.7 |
| 170 | 58.6 | 58.4 | 57.8 |

**Table 6**

| Swell Ratio vs. Adhesive Thickness and Accelerating Potential | | | |
|---|---|---|---|
| | Coating Thickness (µm) | | |
| kV | 14.5 | 36.6 | 73.2 |
| 100 | 83 | 108 | 100 |
| 110 | 67 | 109 | 108 |
| 120 | 44 | 78 | 85 |
| 130 | 37 | 51 | 90 |
| 140 | 40 | 46 | 78 |
| 150 | 35 | 40 | 61 |
| 160 | 33 | 57 | 51 |
| 170 | 35 | 37 | 49 |

**Table 7**

| Floating or Bonded (+) Gel vs. Adhesive Thickness and Accelerating Potential | | | |
|---|---|---|---|
| | Coating Thickness (µm) | | |
| kV | 14.5 | 36.6 | 73.2 |
| 100 | + | - | - |
| 110 | + | - | - |
| 120 | + | + | - |
| 130 | + | + | + |
| 140 | + | + | + |
| 150 | + | + | + |
| 160 | + | + | + |
| 170 | + | + | + |

**Table 8**

| Gel Content (% of elastomer) vs. Adhesive Thickness and Dose | | | |
|---|---|---|---|
| | Coating Thickness (µm) | | |
| Thickness: | 14.5 | 36.6 | 73.2 |
| kV used: | 110 | 125 | 135 |
| Dose (MRad): 0.5 | 6 | 3 | 1 |
| 2.0 | 22 | 31 | 33 |
| 4.0 | 34 | 44 | 48 |
| 6.0 | 33 | 53 | 55 |
| 8.0 | 56 | 57 | 63 |
| 12.0 | 66 | 69 | 71 |

**Table 9**

| MIT Flex Life (cycles) vs. Adhesive Thickness and Dose | | | |
|---|---|---|---|
| | Coating Thickness (µm) | | |
| Thickness: | 14.5 | 36.6 | 73.2 |
| kV used: | 110 | 125 | 135 |
| Dose (MRad): 0.5 | 600 | 580 | 520 |
| 2.0 | 591 | 641 | 584 |
| 4.0 | 394 | 557 | 490 |
| 6.0 | 538 | 361 | -332 |
| 8.0 | 367 | 376 | 300 |
| 12.0 | 303 | 200 | 262 |

**Table 10**

| Unwind Force vs. Voltage at 3 MRad Dose | |
|---|---|
| Voltage (kV) % | Unwind Force - N/cm |
| 100 | 2.18 |
| 125 | 2.08 |
| 175 | 3.82 |

## Claims

1. A method for making a pressure sensitive adhesive tape comprising: (1) applying at least one electron beam radiation crosslinkable elastomer-based pressure sensitive adhesive onto a radiation degradable backing, (2) exposing said adhesive to a beam of electrons which has been accelerated through a potential voltage in the range of between 75 and 175 kilovolts, said voltage utilized being dependent upon, (a) the thickness of the adhesive layer, (b) the thickness of said backing and, (c) the degradation of the electron beam prior to impingement on said adhesive layer and selected such that the reduction in dose from the front of said adhesive layer to the back of the adhesive layer is no greater than 40% and the average dose received by said backing is less than 80% of the average dosage received by said adhesive, said pressure sensitive adhesive layer further having been crosslinked with a sufficient dose of beam energy to produce a gel content in said adhesive of at least 20% by weight of said elastomer, said dose to the pressure sensitive adhesive being less than about 12 megarads.

2. The method of claim 1 wherein the reduction in dose from the front of said adhesive layer to the back of said adhesive layer is no greater than 30%, and the average dose received by said backing is less than 60% of the average dose received by said adhesive.

## Patentansprüche

1. Verfahren zum herstellen eines Hafklebebandes, umfassend: (1) Aufbringen von mindestens einem mit Elektronenstrahl vernetzbaren Haftklebstoff auf Elastomerbasis auf einen strahlungsdegradierbaren Träger; (2) Exponieren des Klebstoffes an einem Strahl von Elektronen, die durch eine Spannung im Bereich von 75 ... 175 Kilovolt beschleunigt wurden, wobei die eingesetzte Spannung abhängt von: (a) der Dicke der Klebstoffschicht; (b) der Dicke des Trägers und (c) der Degradation des Elektronenstrahls vor dem Auftreffen auf der Klebstoffschicht; und die so ausgewählt wird, daß die Verminderung der Dosis von der Vorderseite der Klebstoffschicht zur Rückseite der Klebstoffschicht nicht größer ist als 40 % und die von dem Träger aufgenommene mittlere Dosis kleiner ist als 80 % der von diesem Klebstoff aufgenommenen mittleren Dosis, wobei die Haftklebstoff-Schicht ferner mit einer ausreichenden Dosis einer Strahlenergie vernetzt wurde, um in dem Klebstoff einen Gel-Anteil von mindestens 20 Gewichtsprozent des Elastomers zu erzeugen, wobei die Dosis für den Haftklebstoff kleiner ist als etwa 12 Megarad.

2. Verfahren nach Anspruch 1, bei welchem die Verminderung der Dosis von der Vorderseite der Klebstoffschicht zur Rückseite der Klebstoffschicht nicht größer ist als 30 % und die mittlere aufgenommene Dosis durch die Träger kleiner ist als 60 % der mittleren aufgenommenen Dosis durch den Klebstoff.

## Revendications

1. Procédé de fabrication d'un ruban adhésif sensible à la pression comprenant: (1) l'application d'au moins un adhésif sensible à la pression à base d'élastomère réticulable par rayonnement de faisceau électronique sur un support dégradable au rayonnement, (2) l'exposition de cet adhésif à un faisceau d'électrons qui a été accéléré par une tension de potentiel dans la gamme se situant entre 75 et 175 kilovolts, ladite tension utilisée dépendant (a) de l'épaisseur de la couche d'adhésif, (b) de l'épaisseur du support et (c) de la dégradation du faisceau d'électrons avant de venir frapper la couche d'adhésif et étant choisie de telle sorte que la diminution de dose de l'avant de la couche d'adhésif à l'arrière de la couche d'adhésif ne soit pas supérieure à 40 % et que la dose moyenne reçue par le support précité soit inférieure à 80 % de la dose moyenne reçue par ledit adhésif, la couche d'adhésif sensible à la pression susdite ayant de plus été réticulée avec une dose suffisante d'énergie de faisceau pour produire une teneur en gel dans l'adhésif d'au moins 20 % en poids de l'élastomère précité, ladite dose à l'adhésif sensible à la pression étant inférieure à environ 12 mégarads.

2. Procédé suivant la revendication 1, dans lequel la diminution de dose de l'avant de la couche d'adhésif à l'arrière de la couche d'adhésif n'est pas supérieure à 30 % et la dose moyenne reçue par le support est inférieure à 60 % de la dose moyenne reçue par l'adhésif.
